# DEMANDE DE BREVET EUROPEEN

(11) **EP 2 189 353 A2**
(43) Date de publication de la demande: **26.05.2010**
(21) Numéro de dépôt: 09176657.6
(22) Date de dépôt: 20.11.2009
(51) Int. Cl.: B61F 19/00, B61K 9/00, G01H 1/08

(54) **Procédé et système de détection d'impacts sur des zones à surveiller d'un véhicule roulant, notamment de type ferroviaire**

(30) Priorité: 20.11.2008 FR 0806507
(71) Demandeur: Société Nationale des Chemins De Fer Français - SNCF, 75014 Paris (FR)
(72) Inventeur: Schrevere, Thomas, 94400, Vitry Sur Seine (FR); Marion, Patrick, 94400, Vitry Sur Seine (FR); Moreau, Jérôme, 75005, Paris (FR); Gerault, Christophe, 94600, Choisy Le Roi (FR)
(74) Mandataire: Bloch & Bonnétat

(57) **Abrégé**

L'invention concerne un procédé de détection d'impacts sur des zones à surveiller d'un véhicule roulant (2), créés par des objets projetés en raison de sa vitesse, procédé dans lequel on place des capteurs de vibrations (11a-11d) en contact direct avec les zones à surveiller dudit véhicule roulant (2) et on analyse les signaux des capteurs de vibrations (11a-11d) pour détecter des impacts. L'invention concerne également un système de détection d'impacts sur des zones à surveiller d'un véhicule roulant (2).

## Description

L'invention concerne le domaine de la surveillance des impacts sur un véhicule roulant et, en particulier, les impacts de ballast sur un véhicule ferroviaire circulant à grande vitesse.

Un véhicule roulant, du type véhicule ferroviaire, est par nature exposé à l'environnement extérieur lors de son déplacement sur des voies de circulation, telles que des rails de chemin de fer reposant sur du ballast.

On appelle ballast le lit de pierres ou de graviers sur lequel reposent des rails. Son rôle est de transmettre les efforts engendrés par le passage des véhicules ferroviaires au sol, sans que celui-ci ne se déforme par tassement. Le rôle du ballast est aussi d'enchâsser les rails afin d'assurer une résistance aux déformations longitudinales.

Lors de la circulation d'un véhicule ferroviaire, une force d'aspiration, dépendant de la vitesse du véhicule ferroviaire, se crée entre le véhicule et la voie sur laquelle il circule. En raison de cette force d'aspiration, le ballast décolle du sol, sur lequel il repose, et est propulsé à haute vitesse sur le véhicule ou à proximité des voies. Le ballast entre en collision avec le plancher et les essieux du véhicule ferroviaire. De tels impacts sont néfastes et diminuent la durée de vie des équipements ferroviaires. En outre, de telles projections peuvent également blesser des agents techniques d'entretien situés à proximité des voies de circulation. Ce phénomène est classiquement désigné « envol de ballast ».

Ce phénomène, bien que déjà connu, revêt une importance de plus en plus grande pour les professionnels du transport ferroviaire en raison de la vitesse de plus en plus élevée des véhicules ferroviaires sur les rails. Afin de mieux comprendre ce phénomène, il a été proposé de mesurer et de modéliser l'envol du ballast.

Des méthodes de mesure des projections du ballast lors de la circulation d'un véhicule ferroviaire ont déjà été mises en oeuvre mais n'ont pas permis d'obtenir des résultats satisfaisants.

Ainsi, il est connu par exemple de suspendre des microphones à l'intérieur d'un véhicule ferroviaire à proximité du plancher dudit véhicule de manière à pouvoir écouter les bruits des différents impacts sur la surface extérieure du plancher. Malheureusement, il est difficile de distinguer le bruit des impacts du ballast du bruit de fond, en particulier des vibrations du véhicule ferroviaire lors de sa circulation sur les voies. Les résultats d'une telle méthode sont imprécis et ne permettent pas de tirer de conclusions satisfaisantes.

Un autre inconvénient de ce type de méthode réside dans le fait que lorsqu'un impact est détecté par le microphone, il n'est pas localisable géographiquement. Autrement dit, on ne sait pas à quel endroit du plancher du véhicule ferroviaire le ballast a heurté le plancher. En effet, le bruit de l'impact est reçu quasi simultanément par l'ensemble des microphones, empêchant de déterminer de manière précise la partie du plancher du véhicule qui a été endommagée.

Afin de remédier à cet inconvénient, il a été proposé d'installer des caméras d'enregistrement vidéo filmant la surface extérieure du plancher du véhicule afin de filmer les impacts. En raison de la vitesse élevée du ballast lorsqu'il est projeté sur le plancher du véhicule, il est approprié d'utiliser des caméras dites « rapides » en raison du nombre élevé d'images qu'elles peuvent enregistrer à la seconde. Ainsi, en comparaison avec une caméra classique, une caméra rapide enregistre un nombre bien plus important de données sur une période de temps similaire et permet ainsi de capturer la trajectoire du ballast lors de son envol.

Pour des tests en conditions réelles sur un trajet du véhicule ferroviaire, la capacité de stockage mémoire de la caméra rapide est limitée et il n'est pas possible de filmer en continu les impacts de ballast pendant toute la durée du test.

Pour obvier à cet inconvénient, une solution consiste à prendre des vues en continu, mais à ne recueillir les enregistrements vidéo que lors d'un impact, c'est-à-dire, lors de la détection d'un bruit d'impact par le microphone. Pour permettre de visualiser l'impact, la caméra est associée à un système de pré-déclenchement permettant, à la réception d'un message de commande d'obtenir un enregistrement vidéo antérieur à l'impact.

Le système de pré-déclenchement comprend à cet effet une mémoire tampon, ou volatile, qui comporte les données filmées par la caméra lors des dernières secondes d'enregistrement. D'une manière classique, la mémoire tampon de la caméra comporte les données enregistrées lors des 5 à 10 dernières secondes. Lorsqu'un impact est détecté, le contenu de la mémoire tampon est stocké dans une mémoire de stockage (mémoire non volatile désignée également mémoire morte), la mémoire de stockage comprenant les images de l'impact.

Cette méthode de détection et de visualisation des impacts nécessite un opérateur afin qu'il puisse déclencher l'enregistrement vidéo à chaque détection d'impact. En raison du bruit de fond et de la subjectivité de l'opérateur, la détection des impacts est très aléatoire, de nombreux impacts n'étant pas détectés alors que des fausses alertes sont émises.

Du fait de cet inconvénient, il est nécessaire de visualiser l'ensemble des enregistrements vidéo afin de supprimer les enregistrements non pertinents consécutifs aux fausses alertes de détection. Au surplus, il est nécessaire de renouveler cette étape pour l'ensemble des caméras d'enregistrement. Une telle méthode est donc difficile à mettre en oeuvre et ne permet pas d'obtenir des résultats exploitables de manière fiable.

Afin de résoudre au moins certains de ces problèmes, la demanderesse propose un procédé de détection d'impacts sur des zones à surveiller d'un véhicule roulant, créés par des objets projetés en raison de sa vitesse, dans lequel on place des capteurs de vibrations en contact direct avec les zones à surveiller dudit véhicule roulant et on analyse les signaux des capteurs de vibrations pour détecter des impacts.

Un tel système de détection permet avantageusement de détecter de manière précise les impacts en mesurant directement la vibration résultant de l'impact sur une zone à surveiller du véhicule roulant. De plus, un impact détecté par un capteur de vibration est localisable sur le véhicule roulant ce qui permet de modéliser le phénomène d'envol de ballast.

L'invention est née suite à la découverte des dommages causés par les impacts de ballast sur un véhicule ferroviaire mais il va de soi que l'invention s'applique à tout véhicule roulant (automobile, avion au décollage/atterrissage, etc.) susceptible de projeter des objets (ballast, gravillons, etc.) en raison de sa vitesse.

De préférence, on mesure un coefficient d'impact pour chaque signal de vibrations fourni par un capteur de vibrations, on compare chaque coefficient d'impact à une valeur seuil prédéterminée et on émet un message de détection d'impacts lorsque ledit coefficient d'impact excède ladite valeur seuil prédéterminée.

La mesure d'un coefficient d'impact sur un signal de vibrations permet de s'affranchir des vibrations du véhicule roulant détectées par les capteurs de vibrations lors du déplacement du véhicule. En effet, on aurait pu également utiliser un réseau de neurones pour déterminer si un signal de vibrations, mesuré par un capteur, représentait un signal d'impact mais un tel réseau de neurones est sensible aux bruits et aux vibrations du véhicule et ne fournit pas de résultats satisfaisants.

De préférence encore, on mesure un coefficient d'impact dudit signal de vibrations sur une fenêtre temporelle de durée prédéterminée.

La mesure d'impact sur une fenêtre temporelle permet, d'une part, de limiter le nombre de données du signal de vibration à prendre en compte pour calculer le coefficient d'impact et ainsi de permettre la détection en temps réel de l'impact. D'autre part, cela permet de détecter très finement les impacts sur une fenêtre temporelle d'une taille donnée et ainsi de déterminer précisément l'instant de l'impact.

De préférence, la taille de la fenêtre est déterminée en fonction de la durée de la vibration de la zone à surveiller après l'impact.

De préférence encore, après détection d'un impact, on verrouille la détection d'impact tant que le coefficient d'impact dudit signal de vibrations n'est pas inférieur à ladite valeur seuil.

De préférence toujours, le coefficient d'impact correspond à la mesure crête à crête du signal de vibrations fourni par le capteur de vibrations.

Une solution classique aurait consisté à comparer la valeur efficace du signal à une valeur seuil. Cependant, une telle mesure est sensible aux bruits. Etant donné qu'un impact entraîne des vibrations importantes sur une très courte période de temps (proche de l'impulsion), une mesure crête à crête permet de caractériser un impact dans un signal de vibrations de manière rapide et fiable.

En effet, un signal d'impact correspond à un bruit impulsionnel dont le niveau moyen est faible et dont le niveau crête à crête est important. En outre, une telle mesure est simple à calculer et peut être réalisée rapidement. Grâce à cette mesure, il est possible de détecter un impact en temps réel.

Selon une mise en oeuvre particulière de l'invention, la valeur seuil est fonction de la zone à surveiller du véhicule roulant.

L'utilisation d'une valeur seuil adaptative dans la mise en oeuvre du procédé de détection d'impacts selon l'invention permet d'adapter la détection selon par exemple la nature de la zone à surveiller (matière, densité, surface) ainsi que de sa réponse en vibration. Ainsi, des zones à surveiller en fonte et en aluminium ne possèdent pas la même valeur seuil, un impact étant détecté dans des conditions qui sont propres à la zone dans laquelle sont disposés les capteurs de vibrations.

De préférence, le message de détection d'impact comporte la référence de la zone à surveiller qui a reçu l'impact.

Cela permet avantageusement de localiser pour chaque impact détecté, la zone à surveiller du véhicule roulant ayant détecté l'impact. On peut ainsi obtenir une carte des localisations des impacts sur le véhicule roulant et modéliser de manière pertinente l'envol de ballast.

Selon une mise en oeuvre particulière de l'invention, chaque zone à surveiller est associée à au moins une caméra d'enregistrement vidéo apte à filmer ladite zone. On extrait du message de détection d'impacts la référence de la zone à surveiller qui a reçu l'impact et on active uniquement la caméra d'enregistrement vidéo associée à la référence de ladite zone à surveiller.

Cela permet avantageusement de n'activer que les caméras d'enregistrement vidéo qui sont susceptibles de visualiser la projection de l'objet sur le véhicule, évitant ainsi de recourir à une étude systématique de l'ensemble des enregistrements. Le traitement des données enregistrées est alors facilité.

L'invention concerne également un système de détection d'impacts sur des zones à surveiller d'un véhicule roulant, créés par des objets projetés en raison de sa vitesse. Le système comporte des capteurs de vibrations en contact direct avec les zones à surveiller dudit véhicule roulant et une unité de traitement de données, reliée à la pluralité de capteurs de vibrations, agencée pour recevoir les signaux de vibrations fournis par la pluralité de capteurs de vibrations et détecter des signaux d'impact parmi lesdits signaux de vibrations pour chacune des zones à surveiller du véhicule roulant.

De préférence, l'unité de traitement comprend un module de discrimination agencé pour:
- mesurer un coefficient d'impact pour chaque signal de vibrations fourni par un capteur de vibrations ;
- comparer ledit coefficient d'impact à une valeur seuil prédéterminée;
- émettre un message de détection d'impact lorsque ledit coefficient d'impact excède ladite valeur seuil prédéterminée.

De préférence encore, l'unité de traitement comprend une table de correspondances, reliée au module de discrimination, associant pour chaque capteur de vibrations la zone à surveiller dans laquelle il est placé.

La table de correspondances permet ainsi de mettre en relation la référence des capteurs avec la localisation des capteurs.

Selon une forme de réalisation particulière de l'invention, l'unité de traitement comprend un module d'administration vidéo dont l'entrée est reliée au module de discrimination et dont la sortie est reliée à une pluralité de caméra d'enregistrement vidéo, le module d'administration vidéo étant agencé pour commander la pluralité de caméras d'enregistrement vidéo en fonction des messages de détection d'impact émis par le module de discrimination.

De préférence, le module d'administration vidéo est relié à une table de localisation dans laquelle chaque zone à surveiller du véhicule roulant est associée à au moins une caméra d'enregistrement vidéo apte à filmer ladite zone, le module d'administration vidéo étant agencé pour recevoir un message de détection d'impact du module de discrimination, extraire du message de détection d'impact la référence de la zone à surveiller qui a reçu l'impact, transmettre ladite référence de zone à surveiller à la table de localisation, ladite table de localisation retournant en réponse la référence de la caméra d'enregistrement associée à ladite zone à surveiller et commander uniquement l'activation de la caméra d'enregistrement correspondant à la référence de la caméra fournie.

L'invention sera mieux comprise à l'aide du dessin annexé sur lequel :
- la figure 1 représente une vue en coupe d'un véhicule ferroviaire équipé d'un système de surveillance selon l'invention dans lequel les capteurs de vibrations dudit système de surveillance sont fixés sur le plancher dudit véhicule ferroviaire ;
- la figure 2 représente une vue de côté schématique de la figure 2 ;
- la figure 3 représente un diagramme schématique du système de surveillance des figures 1 et 2;
- la figure 4 représente un signal mesuré par un capteur de vibrations du système de surveillance selon l'invention, le signal étant affiché sur un graphique dont l'abscisse indique le temps en seconde et l'ordonnée la valeur des vibrations mesurée dans la direction verticale (m/s²); et
- la figure 5 représente un autre signal mesuré par un capteur de vibrations du système de surveillance selon l'invention, la valeur seuil étant représentée.

Le système de détection et de surveillance d'impacts sur un véhicule roulant selon l'invention va être maintenant présenté pour un véhicule ferroviaire. Il va de soi que l'invention s'applique à d'autres véhicules roulants, en particulier, les véhicules automobiles.

Dans cet exemple, le système est agencé pour détecter et surveiller les projections de ballast sur le véhicule ferroviaire et en particulier sur la surface extérieure de son plancher ainsi que sur ses essieux. L'invention s'applique à tous les objets projetés sur le véhicule en raison de sa vitesse (ballast, gravillons, etc.).

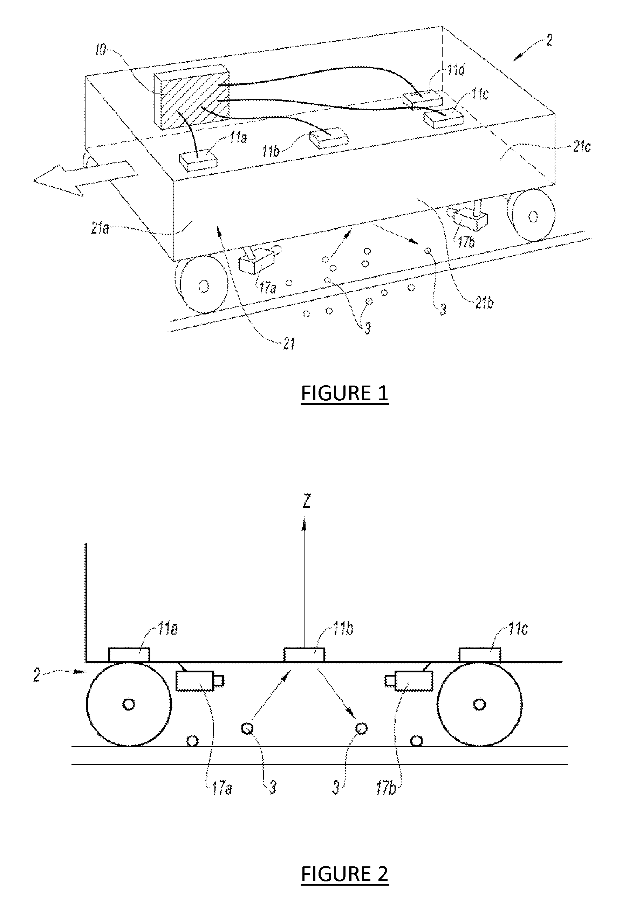

En référence à la figure 1, un système 1 de détection et de surveillance de projection de ballast est installé sur un véhicule ferroviaire 2, circulant sur des rails longitudinaux enchâssés dans du ballast 3. Le ballast 3 se présente sous la forme de cailloux dont le diamètre est compris entre 5 cm et 10 cm.

Pour rappel, on appelle ballast 3 le lit de pierres ou de graviers sur lequel repose des rails. Son rôle est de transmettre les efforts engendrés par le passage des véhicules ferroviaires au sol, sans que celui-ci ne se déforme par tassement. Le rôle du ballast 3 est aussi d'enchâsser les rails afin d'assurer une résistance aux déformations longitudinales.

Dans cet exemple, on considère un véhicule ferroviaire 2 dont le plancher 21 comporte des essieux sur lesquels sont montés des roues qui reposent sur les rails. Le plancher 21 comporte une surface intérieure, tournée vers l'intérieur du véhicule ferroviaire 2, et une surface extérieure tournée vers le sol et le ballast 3.

En référence aux figures 1 et 2, le système de surveillance 1 comporte une pluralité de capteurs de vibrations 11a-11d placés directement sur la surface intérieure du plancher 21 du véhicule ferroviaire 2 et une unité de traitement de données 12 montée dans le véhicule ferroviaire 2. L'unité de traitement de données 12, reliée à la pluralité de capteurs de vibrations 11a-11d, est agencée pour recevoir les signaux de vibrations fournis par les capteurs de vibrations 11a-11d. Les capteurs de vibrations 11a-11d sont ici reliés à l'unité de traitement 12 de manière filaire mais il va de soi qu'une liaison radio conviendrait également.

Les capteurs de vibrations 11a-11d sont montés dans le véhicule ferroviaire 2 pour capter les vibrations du plancher 21 du véhicule ferroviaire 2 dans la direction verticale, c'est-à-dire dans la direction orthogonale au plan dans lequel s'étend le plancher 21 du véhicule ferroviaire 2. La direction de mesure des vibrations par les capteurs de vibrations 11a-11d est désignée Z sur la figure 2.

Dans cet exemple, le plancher 21 du véhicule ferroviaire 2 comporte une pluralité de plaques structurales de maintien 21a-21c, ou tôles de maintien, qui forment le plancher 21. Chaque plaque 21a-21c forme une unité de vibrations du fait qu'un impact de ballast 3 sur une partie de la plaque 21a-21c fait vibrer ladite plaque dans son ensemble. Autrement dit, les vibrations résultant d'un impact de ballast 3 sur une plaque 21a-21c donnée ne sont pas transmises aux plaques voisines 21a-21c de ladite plaque 21a-21c ayant reçue l'impact.

Les capteurs de vibrations 11a-11d se présentent ici sous la forme d'accéléromètres. Les capteurs de vibrations 11a-11d sont ici choisis de manière à pouvoir mesurer les vibrations résultant d'un impact sur une plaque 21a-21c du plancher 21 afin d'éviter une saturation du capteur de vibrations 11. La gamme de fréquence des capteurs est ici comprise entre 5Hz et 1kHz.

Les capteurs de vibrations 11a-11d sont ici répartis sur des zones à surveiller du plancher 21 du véhicule ferroviaire 2, les zones à surveiller correspondant aux plaques structurales de maintien 21a-21c du plancher 21.

Contrairement à une mesure sonore telle qu'elle était réalisée précédemment avec un microphone, la mesure de vibrations au moyen d'un ou plusieurs capteurs de vibrations 11a-11d placés directement sur une plaque structurale de maintien 21a-21c permet d'associer pour chaque impact détecté par l'unité de traitement 12 la plaque 21a-21c qui a été touchée par une projection de ballast 3. Etant donné que chaque plaque 21a-21c forme une unité de vibration, la détection d'un impact par un capteur de vibrations 11 permet de déduire quelle plaque 21a-21c a reçu l'impact.

Le système de détection et de surveillance 1 de l'invention permet non seulement de compter les impacts de ballast mais il permet également de définir en temps réel la localisation des impacts. On qualifie alors ce système de système de détection localisée d'impacts.

L'unité de traitement 12 du système de surveillance 1 est montée de préférence dans le véhicule ferroviaire 2 et est reliée aux capteurs de vibrations 11a-11d répartis sur les différentes plaques de maintien 21a-21c du plancher 21 du véhicule ferroviaire 2. En référence à la figure 1, l'unité de traitement 12 est montée sur une paroi verticale du véhicule ferroviaire 2 mais pourrait également reposer sur la surface intérieure du plancher 21 du véhicule ferroviaire 2.

L'unité de traitement 12 se présente ici comme un ensemble de calculateurs, tels que des ordinateurs et des serveurs, mais il va de soi qu'un seul et unique calculateur pourrait également convenir.

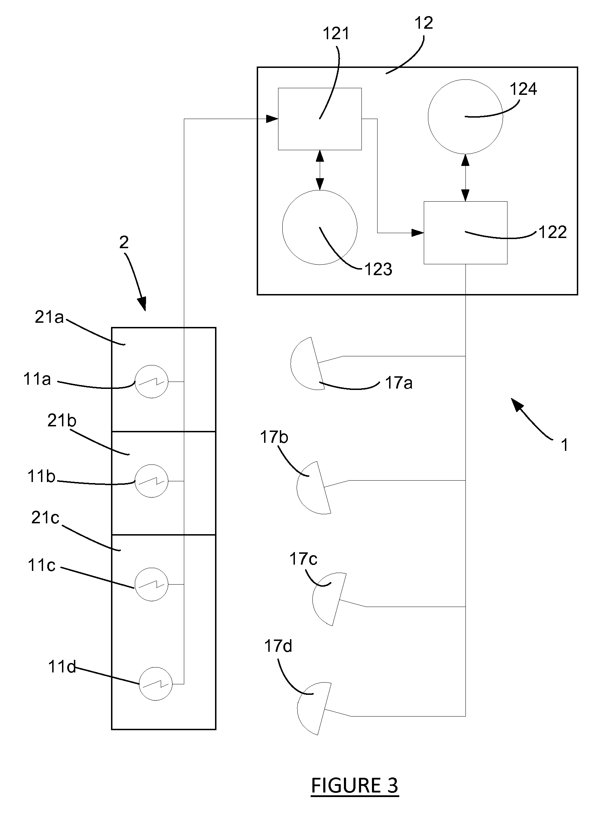

En référence à la figure 3, l'unité de traitement 12 comprend un module de discrimination 121 dont la fonction principale est de rassembler les différents signaux de vibrations fournis par les capteurs de vibrations 11a-11d et de détecter parmi ces signaux un impact de ballast 3. Autrement dit, le rôle du module de discrimination 121 est d'extraire d'un signal global de vibrations issu d'un capteur de vibrations un signal de vibrations caractéristique d'un impact de ballast 3.

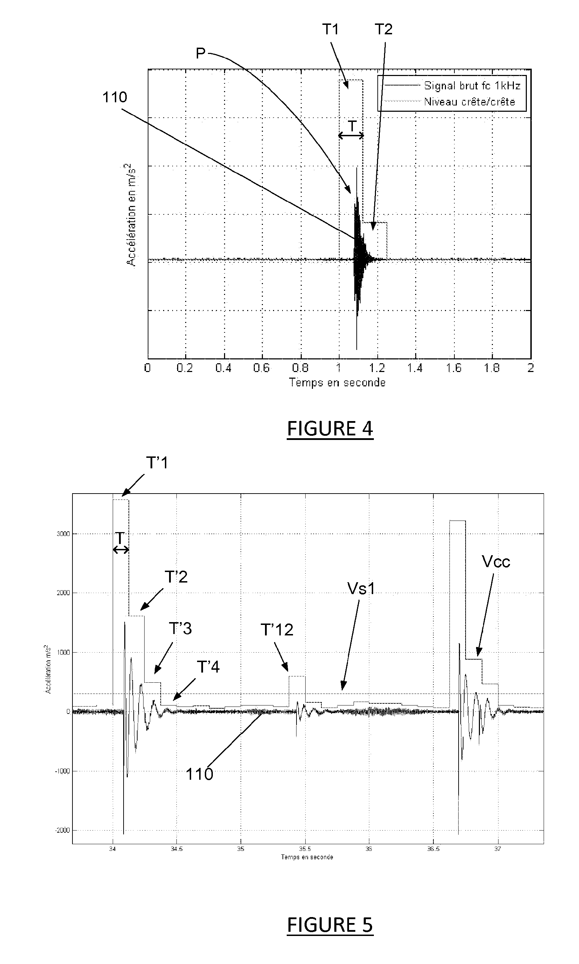

A cet effet, en référence à la figure 4, le module de discrimination 121 est agencé pour recevoir un signal de vibrations 110 et l'analyser en temps réel sur une fenêtre temporelle de taille prédéterminée T. Autrement dit encore, chaque signal de vibrations 110 est découpé de manière séquentielle en portions de signal de durée prédéterminée T. Chaque portion de signal de vibrations 110 est ensuite analysée par le module de discrimination 121 pour distinguer un signal caractéristique d'un impact de ballast.

En référence à la figure 3, dans une première étape de l'analyse de la portion de signal de vibrations 110, on mesure un indice d'impact Ci qui correspond, dans le cas présent, à la valeur crête à crête V_{cc} du signal de vibrations 110 sur la durée prédéterminée. On compare ensuite l'indice d'impact Ci à une valeur seuil prédéterminée Vs, désignée également seuil Vs. Le seuil Vs, calculé préalablement, dépend de plusieurs paramètres de la zone à surveiller 21a-21c tels que sa matière, sa densité, sa réponse en vibration ou sa surface de vibration.

Les positions des différents capteurs de vibration 11a-11d sur les différentes zones à surveiller 21a-21c du plancher 21 du véhicule ferroviaire 2 sont référencées dans une table de correspondances 123 stockée dans l'unité de traitement 12, comme représentée sur la figure 3. Les différents seuils Vs sont également associés aux différentes zones à surveiller 21a-21c du plancher 21 dans ladite table de correspondances 123 (voir tableau ci-dessous).

**Tableau 1: Table de correspondances**

| Capteur de vibrations | Zone à surveiller | Valeur seuil |
|---|---|---|
| 11a | 21a | Vs1 |
| 11b | 21b | Vs1 |
| 11c | 21c | Vs2 |
| 11d | 21c | Vs2 |

En référence à la figure 3, le véhicule ferroviaire 2 comporte trois zones à surveiller 21a-21c, une valeur seuil Vs ayant été préalablement déterminée pour chacune d'entre elles. D'une manière classique, un seuil de vibrations Vs est défini de manière empirique pour chaque famille de zones à surveiller (plaques structurales en acier, plaques structurales en fonte). Ainsi, comme indiqué dans le tableau 1 ci-dessus, la zone à surveiller 21c possède une valeur seuil Vs2 différente de celle des zones à surveiller 21a-21b. Dans cet exemple, la plaque structurale de maintien, correspondant à la zone à surveiller 21c, est formée dans une matière différente de celle des plaques structurales de maintien correspondant aux zones à surveiller 21a-21b.

En référence à l'exemple de la figure 4 représentant un signal de vibrations issu du capteur de vibrations 11b monté sur la zone à surveiller 21b du plancher 21, la valeur seuil Vs1 pour le signal de vibrations 110 de ladite zone à surveiller 21b est égale à 300 m/s².

Pour chaque signal de vibrations 110 reçu par le module de discrimination 121, celui-ci détermine le capteur de vibrations 11a-11d dont est issu le signal de vibrations 110. Par interrogation de la table de correspondances 123 avec laquelle le module de discrimination 121 est relié, le module de discrimination 121 détermine la zone à surveiller 21a-21c sur laquelle est placé le capteur de vibrations 11a-11d dont le signal de vibrations 110 est analysé. Ainsi, en cas de détection d'un impact de ballast 3, le module de discrimination 121 fournit immédiatement la zone à surveiller 21a-21c heurtée par le ballast 3.

Lors de l'étape de comparaison, en référence à la figure 4, dans la fenêtre temporelle T1, l'indice d'impact Ci est supérieur à la valeur seuil Vs1 de la zone à surveiller 21b. Un impact est détecté par le module de discrimination 121 qui retourne à l'unité de traitement 12 un message de détection Mi dans lequel il est indiqué qu'un impact est survenu en précisant la zone à surveiller ayant reçu l'impact et l'instant de détection de l'impact de ballast 3. Ici le message de détection Mi indique qu'un impact est survenu à l'instant t1 sur la zone à surveiller 21b.

A l'inverse, toujours en référence à la figure 4, dans la fenêtre temporelle T2, l'indice d'impact Ci est inférieur à la valeur seuil Vs1, aucun impact n'est détecté par le module de discrimination 121 et aucun message de détection Mi n'est envoyé.

Le module de discrimination 121, paramétré par les valeurs seuil Vs adaptées à chacune des zones à surveiller 21a-21d, permet de détecter, de manière précise, un impact de ballast sur le plancher 21 du véhicule ferroviaire 2.

Les valeurs des seuils adaptatifs Vs permettent de s'affranchir du bruit de fond constitué par les vibrations du véhicule roulant 2 lors de sa circulation sur les rails, un tel système de surveillance et de détection 1 permettant avantageusement de limiter le nombre de fausses alertes.

Dans une mise en oeuvre particulière de l'invention, le module de discrimination 121 est agencé pour distinguer deux impacts successifs. A cet effet, le module de discrimination 121 est paramétré pour comptabiliser un impact lorsque l'indice d'impact Ci est supérieur à la valeur seuil Vs pour une première fenêtre temporelle. Aucun autre impact ne peut être comptabilisé tant que l'indice d'impact Ci n'est pas inférieur à la valeur seuil Vs pour une deuxième fenêtre temporelle, postérieure à la première. Ce mécanisme de verrouillage permet d'éviter qu'un même impact soit comptabilisé plusieurs fois par le système de surveillance et de détection 1.

En référence à la figure 5, l'indice d'impact Ci, correspondant à la mesure crête à crête Vcc, est supérieur à la valeur seuil Vs pour les fenêtres temporelles T'1, T'2 et T'3. Suite à la détection de l'impact dans la fenêtre temporelle T'1, un signal de verrouillage est activé, empêchant de comptabiliser un nouvel impact pour les fenêtres temporelles T'2 et T'3.

Le signal de verrouillage est désactivé pour la fenêtre temporelle T'4 dans laquelle la mesure crête à crête Vcc est inférieure à la valeur seuil Vs. Cela permet avantageusement de détecter un nouvel impact dans la fenêtre temporelle T'12.

On peut associer le système de détection et de surveillance d'impacts 1 à un système de géolocalisation et à une cartographie. Au cours du trajet du véhicule ferroviaire, le système de détection transmet le nombre d'impacts détectés et le lieu de l'impact sur le véhicule. Ces informations sont transmises au système de géolocalisation qui reproduit sur une cartographie de la zone parcourue le nombre d'impacts reçus. Ainsi, on peut détecter sur quelle partie du trajet le nombre d'impacts est le plus important.

De manière avantageuse, on représente sur la cartographie les secteurs du trajet susceptibles de favoriser l'envol de ballast. On représente, par exemple, en rouge les secteurs du trajet favorisant l'envol de ballast. La cartographie colorée est ensuite transmise aux agents d'entretien des voies qui peuvent alors aménager les voies de circulation pour diminuer le phénomène d'envol de ballast.

Dans un mode de réalisation préféré de l'invention, le système de détection et de surveillance 1 comporte une pluralité de caméras d'enregistrement vidéo 17a-17d qui sont montées sur le véhicule ferroviaire 2 de manière à visualiser une ou plusieurs zones à surveiller 21a-21c du véhicule ferroviaire 2.

Chaque caméra d'enregistrement vidéo 17a-17d est ici montée sur la surface extérieure du plancher 21 du véhicule ferroviaire 2 de manière à ce qu'au moins une zone à surveiller 21a-21c du véhicule ferroviaire 2 soit comprise dans l'angle de vision d'une des caméras d'enregistrement vidéo 17a-17d.

Comme présenté dans le préambule de la présente demande, les caméras d'enregistrement vidéo 17a-17d utilisées sont des caméras dites « rapides » en raison du nombre élevé d'images qu'elles peuvent enregistrer à la seconde (entre 100 et 250 images par seconde).

Chaque caméra d'enregistrement vidéo 17a-17d est associée à un système de pré-déclenchement permettant, à la réception d'un message de détection Mi d'obtenir un enregistrement vidéo antérieur et postérieur à l'impact.

Le système de pré-déclenchement comprend à cet effet une mémoire tampon, ou volatile, qui comporte les données filmées par la caméra lors des dernières secondes d'enregistrement. D'une manière classique, la mémoire tampon de la caméra comporte les données enregistrées lors des 5 à 10 dernières secondes. Lors qu'un impact est détecté, le contenu de la mémoire tampon est stocké dans une mémoire de stockage (mémoire non volatile), la mémoire de stockage comprenant les images de l'impact.

En pratique, le système de pré-déclenchement est agencé pour stocker en mémoire les données filmées 5 secondes avant et 5 secondes après le choc effectif du ballast 3 sur le plancher 21.

En référence aux figures 1 et 2, les caméras d'enregistrement vidéo 17a, 17b sont montés en différentes positions sur le plancher 21 du véhicule ferroviaire 2 et sont reliées à l'unité de traitement 12, les caméras d'enregistrement vidéo 17c, 17d n'étant pas visibles sur ces figures. Les caméras 17a-17d sont ici reliées de manière filaire mais il va de soi qu'elles pourraient également être reliées par une liaison radio.

Une table de localisation 124, représentée sur le tableau 2 ci-dessous, associe pour chaque zone à surveiller 21a-21c du véhicule roulant 2 au moins une caméra d'enregistrement vidéo 17a-17d apte à filmer ladite zone 21a-21c, c'est-à-dire les zones à surveiller 21a-21c qui sont visibles par ladite caméra d'enregistrement vidéo 17a-17d.

**Tableau 2 : Table de localisation 124**

| Zone à surveiller | Caméra d'enregistrement |
|---|---|
| 21a | 17a |
| 21b | 17a, 17b |
| 21c | 17a, 17b, 17c, 17d |

Ainsi, la caméra d'enregistrement vidéo 17a représentée sur la figure 1 filme les plaques structurales de maintien 21a et 21b, tandis que la caméra d'enregistrement vidéo 17b ne filme que la plaque structurale de maintien 21b.

En référence à la figure 3, l'unité de traitement 12 du système de surveillance 1 comporte en outre un module d'administration 122 agencé pour commander les différentes caméras d'enregistrement vidéo 17a-17d en fonction des messages de détection Mi émis par le module de discrimination 121. A cet effet, le module d'administration 122 est relié en entrée à la sortie du module de discrimination 121 et en sortie aux caméras d'enregistrement vidéo 17a-17d, le module d'administration 122 étant également en communication avec la table de localisation 124.

Comme indiqué précédemment, lorsqu'un impact est détecté par un capteur de vibrations 110, le module de discrimination 121 émet un message de détection Mi dans lequel il est indiqué qu'un impact est survenu sur une zone à surveiller 21a-21c à un instant déterminé. Ledit message de détection Mi est transmis au module d'administration 122 de l'unité de traitement 12 qui extrait du message de détection Mi l'instant de l'impact ainsi que la zone à surveiller 21a-21c ayant reçu l'impact. La référence de la zone 21a-21c est ensuite introduite dans la table de localisation 124 qui retourne en réponse les références des caméras d'enregistrement vidéo 17a-17d qui sont orientées en direction de ladite zone référencée 21a-21c.

Ainsi, en reprenant l'exemple précédent, lorsqu'un impact de ballast 3 est détecté par le capteur de vibrations 11b, le module de discrimination 121 de l'unité de traitement 12 émet un message de détection Mi en précisant que la plaque structurale de maintien 21b a reçu un impact. Le module d'administration vidéo 122 reçoit le message de détection Mi et consulte la table de localisation 124 pour déterminer les caméras d'enregistrement vidéo à activer. Ici, comme la plaque structurale de maintien 21b a reçu un impact, les caméras d'enregistrement vidéo 17a et 17b sont activées (voir tableau 2).

Ainsi, seules les caméras d'enregistrement vidéo 17a, 17b susceptibles de filmer l'envol du ballast 3 sont activées. Le visionnage des enregistrements vidéo en est alors facilité, le nombre d'enregistrements correspondants à des fausses alertes (erreurs de détection) étant très limité.

Dans cet exemple, le module d'administration 122 de l'unité de traitement comporte également une base de données d'enregistrements vidéo, non représentée, dans laquelle les différents enregistrements vidéo, enregistrés par les caméras d'enregistrement vidéo 17a-17d, sont stockés.

Il a été ici décrit des capteurs de vibrations se présentant sous la forme d'accéléromètres mais il va de soi que des jauges de contrainte pourraient également convenir.

En outre, il a été ici décrit des capteurs de vibration monté sur la surface intérieure du plancher mais il va de soi que ces derniers pourraient également être montés sur la surface extérieure. Dans ce cas, il est nécessaire de protéger les capteurs à l'encontre des conditions extérieures (pluie, gel, etc.) mais également contre les chocs liés au ballast.

## Revendications

1. Procédé de détection d'impacts sur des zones à surveiller (21a-21c) d'un véhicule roulant (2), créés par des objets projetés en raison de sa vitesse, dans lequel:
- on place des capteurs de vibrations (11a-11d) en contact direct avec les zones à surveiller (21a-21c) dudit véhicule roulant (2) et
- on mesure un coefficient d'impact (Ci) pour chaque signal de vibrations (110) fourni par un capteur de vibrations (11a-11d);
- on compare chaque coefficient d'impact (Ci) à une valeur seuil prédéterminée (Vs);
**caractérisé par le fait que** l'on émet un message de détection d'impacts (Mi) lorsque ledit coefficient d'impact (Ci) excède ladite valeur seuil prédéterminée (Vs), le message de détection d'impact (Mi) comportant la référence de la zone à surveiller (21a-21c) qui a reçu l'impact.

2. Procédé selon la revendication 1, dans lequel on mesure un coefficient d'impact (Ci) dudit signal de vibrations (110) sur une fenêtre temporelle de durée prédéterminée (T).

3. Procédé selon l'une des revendications 1 à 2, dans lequel le coefficient d'impact (Ci) correspond à la mesure crête à crête (V_{cc}) du signal de vibrations (110) fourni par le capteur de vibrations (11a-1d).

4. Procédé selon l'une des revendications 1 à 3, dans lequel la valeur seuil (Vₛ) est fonction de la zone à surveiller (21a-21c) du véhicule roulant (2).

5. Procédé selon la revendication 4, dans lequel chaque zone à surveiller (21a-21c) est associée à au moins une caméra d'enregistrement vidéo (17a-17d) apte à filmer ladite zone (21a-21c), et
- on extrait du message de détection d'impacts (Mi) la référence de la zone à surveiller (21a-21c) qui a reçu l'impact ;
- on active uniquement la caméra d'enregistrement vidéo (17a-17d) associée à la référence de ladite zone à surveiller (21a-21c).

6. Système de détection d'impacts sur des zones à surveiller (21a-21c) d'un véhicule roulant (2), créés par des objets projetés en raison de sa vitesse, comportant :
- des capteurs de vibrations (11a-11d) en contact direct avec les zones à surveiller (21a-21c) dudit véhicule roulant (2) et
- une unité de traitement de données (12), reliée à la pluralité de capteurs de vibrations (11a-11d), agencée pour
o recevoir les signaux de vibrations (110) fournis par la pluralité de capteurs de vibrations (11a-1d) et
o détecter des signaux d'impact parmi lesdits signaux de vibrations (110) pour chacune des zones à surveiller (21a-21 c) du véhicule roulant (2),
**caractérisé par le fait que** l'unité de traitement (12) comprend :
- une table de correspondances (123) associant pour chaque capteur de vibrations (11a-11d) la zone à surveiller (21a-21c) dans laquelle il est placé,
- un module de discrimination (121), relié à la table de correspondance (123), agencé pour:
o mesurer un coefficient d'impact (Ci) pour chaque signal de vibrations (110) fourni par un capteur de vibrations (11a-11d);
o comparer ledit coefficient d'impact (Ci) à une valeur seuil prédéterminée (Vₛ) ;
o émettre un message de détection d'impact (Mi) lorsque ledit coefficient d'impact (Ci) excède ladite valeur seuil prédéterminée (Vₛ), le message de détection d'impact (Mi) comportant la référence de la zone à surveiller (21a-21c) qui a reçu l'impact.

7. Système selon la revendication 6, dans lequel l'unité de traitement (12) comprend un module d'administration vidéo (122) dont l'entrée est reliée au module de discrimination (121) et dont la sortie est reliée à une pluralité de caméra d'enregistrement vidéo (17a-17d), le module d'administration vidéo (122) étant agencé pour commander la pluralité de caméras d'enregistrement vidéo (17a-17d) en fonction des messages de détection d'impact (Mi) émis par le module de discrimination (121).

8. Système selon la revendication 7, dans lequel le module d'administration vidéo (122) est relié à une table de localisation (124) dans laquelle chaque zone à surveiller (21a-21c) du véhicule roulant (2) est associée à au moins une caméra d'enregistrement vidéo (17a-17d) apte à filmer ladite zone (21a-21c), le module d'administration vidéo (122) étant agencé pour :
- recevoir un message de détection d'impact (Mi) du module de discrimination (121) ;
- extraire du message de détection d'impact (Mi) la référence de la zone à surveiller (21a-21c) qui a reçu l'impact;
- transmettre ladite référence de zone à surveiller (21a-21c) à la table de localisation (124), ladite table de localisation (124) retournant en réponse la référence de la caméra d'enregistrement (17a-17d) associée à ladite zone à surveiller (21a-21c) ;
- commander uniquement l'activation de la caméra d'enregistrement (17a-17d) correspondant à la référence de la caméra fournie.
